# EUROPEAN PATENT APPLICATION

(11) **EP 1 550 931 A1**
(43) Date of publication of application: **06.07.2005**
(21) Application number: 03079205.5
(22) Date of filing: 31.12.2003
(51) Int. Cl.: G06F 1/00

(54) **Unlocking of a locked functionality of a computer-controlled apparatus**

(71) Applicant: Neopost S.A., 92220 Bagneux (FR)
(72) Inventor: Wiersma, Jelle, 9222 LB Drachtster Compagnie (NL)
(74) Representative: Prins, Adrianus Willem, Mr. Ir.

(57) **Abstract**

For unlocking a functionality of a computer controlled apparatus (1, 3), an identification code is obtained and sent to an unlocking service (21). An unlocking key including a functionality code that represents at least one functionality to be unlocked is received and a combination of the unlocking key and the identification is checked against a predetermined requirement. If the checked combination meets the predetermined requirement, the functionality represented by the functionality code is unlocked. The unlocking has a limited validity ending after the first unlocking of the functionality in response to the checked combination. An apparatus for carrying out such a method and a method for providing an unlocking key therefore are also described.

## Description

### FIELD AND BACKGROUND OF THE INVENTION

The present invention relates to a method of unlocking a functionality of a computer controlled apparatus according to the introductory portion of claim 1, to a method for providing an unlocking key for unlocking a functionality of a computer controlled apparatus according to the introductory portion of claim 11 and to a system adapted for unlocking at least one functionality of a computer controlled apparatus according to the introductory portion of claim 9.

Such methods and such a system are known from UK patent application 2 365 169. According to this known method, a software application is registered via a customer service system, and the registration information, provided to customer service, is stored also on the customer system. When the user orders a particular option, a system identification uniquely identifying the application for which the option is to be installed is constructed from elements of the registration information. An order alteration request is then constructed from the system identification and from the ordered option. The order alteration request is communicated to the customer service system. The customer service system receives the order alteration request and verifies the order using the system identification; checking the order for consistency, and in particular for whether some options already installed should be deleted for the software application to function properly; computing a key computed by hashing the predetermined elements of the order alteration request. The customer system computes a confirmatory key by hashing the predetermined elements of the order alteration request and compares the computed confirmation key to the received key, and installs the option only if the keys are the same.

A disadvantage of this method is, that two order alteration requests and the associated installations and de-installations of software are required, if functionalities need to be unlocked temporarily, for instance for testing, maintenance or changing settings.

For allowing selective access to particular functionalities of a computer system, it is known to make such access dependent on the status of the user name under which the user is logged on to the computer system. However, for allowing a third party service technician access to many functionalities but not to all other parts of a network for which this service technician is not cleared, this requires a specifically user status to be predefined and deleted or at least made inaccessible after the job of the service technician has been completed.

It is also known to make particular functionalities of a computer-controlled apparatus accessible if a so-called dongle (a piece of hardware) is connected to a port of the computer or if a particular code is entered. However, the dongle may easily be lost or stolen and needs to be distributed and stored physically. In practice it has been shown that permanent codes may easily become available to too many persons or, conversely are often forgotten by the persons for whom they are intended.

### SUMMARY OF THE INVENTION

It is an object of the present invention to provide a method and a system with which temporary access to a functionality of a computer controlled apparatus can be provided more easily.

According to the invention, this object is achieved by providing a method according to claim 1. The invention further provides a system according to claim 9, which specifically adapted for carrying out the method according to claim 1.

Because the validity of the at least one unlocking of the at least one functionality is of a limited duration, it is not necessary to make a second request for an alteration to end the unlocking of functionalities that were to be made available only temporarily. Moreover, it is ensured that code forming an unlocking key that has been provided for unlocking a functionality for a limited operation is not usable for other operations. The invention also opens the possibility of making functionalities available at limited cost to users who only have an interest in incidental or occasional use of such functionalities, for instance for an incidental mailing related to a special occasion.

The limited validity may for instance be dependent on the unlocked functionality or the particular type of unlocking key. A particularly flexible determination of the validity may be made if the method according to claim 11 is applied, so that limitation of the validity is sent with the co de forming the unlocking key.

Particular embodiments of the invention are set forth in the dependent claims.

Further features, effects and details of the invention are described with reference to an example of an embodiment of the invention.

### BRIEF DESCRIPTION OF THE DRAWINGS

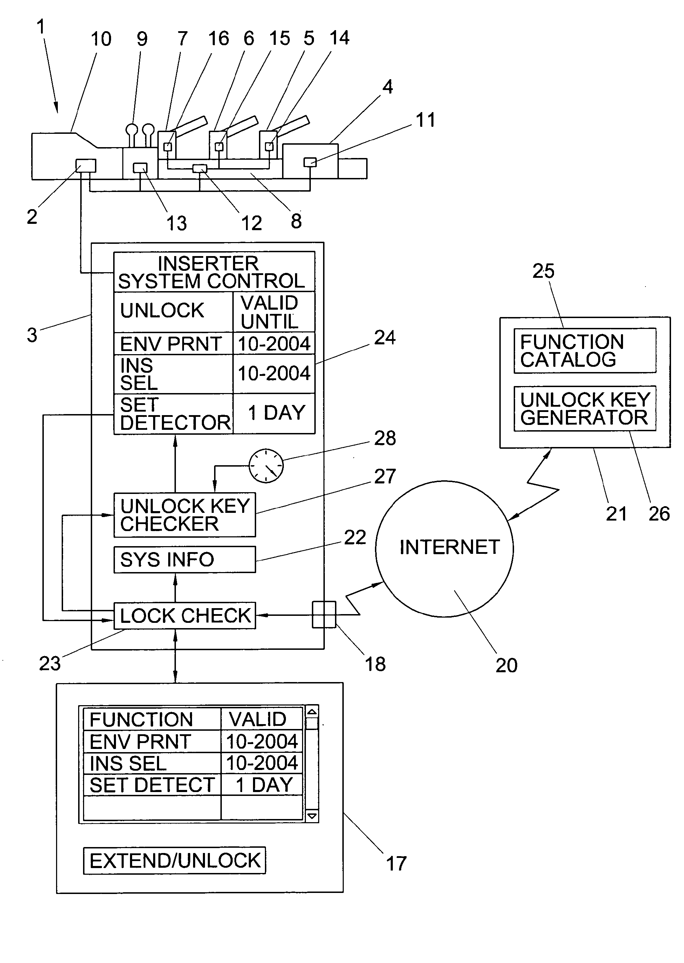

The drawing is a schematic representation of an example of a system according to the invention shown in a network environment.

### DETAILED DESCRIPTION

In the drawing, an inserter system 1 is shown having a central control unit 2 communicating with a personal computer 3 on which an operating system. The inserter system, includes a feeder/collator 4 for feeding main documents, insert feeding stations 5, 6, 7, a transport track 8 for transporting sets that are being assembled between the insert feeding stations 5-7, a folding station 9 and an inserter station 10 which may include for instance an envelope printing facility. The central control unit 2 of the inserter system is connected to distributed control units 11, 12, 13 of the feeder/collator 4, the transport track 8 and the folding station 9. The distributed control unit 12 of the transport track 8 is connected to further distributed control units 14, 15, 16 of the insert feeding stations 5, 6, 7.

The computer 3 is connected to a graphic display 17 and is provided with a network adapter 18 for connection to a network. The network adapter 18 may for instance connect via local network (not shown) to the Internet 20, to which also a unlocking service system 21 is connected.

On the personal computer 3, a system identification extractor (SYSINFO) 22 component is installed for obtaining an identification code. This identification code may for instance be obtained from hardware of the computer 3 and/or from hardware connected thereto. For instance, a so-called MAC address of the network adapter 18, by which the computer 4 may be identified in the network, may be used for determining the system identification. Also, or alternatively, if it is desired to identify the system by the inserter system 1, the system identification extractor may be arranged to read or extract a serial number of the inserter system 1 to partially or entirely determine the identification code. Another source that may be used for determining the identification code of the shown system is a so-called hardware profile ID that is determined by the operating system of the computer 3 when it is installed. This ID is stored in the system-administration.

Any of these identification codes and/or serial numbers or a combination thereof or parts thereof may be used to obtain a system identification, which is bound to a specific piece of hardware. The system identification is determined such that, taking into account the purpose at issue, it may safely be assumed, that no other system exists, to which the same identification applies.

The network adapter 18 also serves as a communication structure for sending the identification code to the unlocking service 21 and for receiving at least one unlocking key including a functionality code that represents at least one functionality to be unlocked. According to the present example, a lock-checking component (LOCK CHECK) 23 is provided for administration of the unlocking status and the handling of unlocking requests and unlocking keys. The lock-checking component 23 reads unlocked functionalities of an inserter system control program (INSERTER SYSTEM CONTROL) 24 and possible functionalities from a function catalogue 25 maintained by the unlocking service 21 and causes possible functions and the current unlocking status and the remaining duration of any unlocked functionalities to be displayed on the display 17.

By selecting the "EXTEND OR UNLOCK" buttons on the display 17, the user may send a request to extend the remaining duration of the selected functionality or, as may be applicable, to unlock it. This function may be blocked or concealed for some functionalities that are intended for service technicians only, such as an operating log viewer and particular test functions. If the request is approved at the unlocking service system 21, an unlock key generator 26 generates an unlocking key, that includes an indication for which functionality or functionalities the unlocking key applies and preferably also code representing the duration of the validity of the unlocking from the moment the functionality to be unlocked has actually been unlocked in response to that unlocking key for the first time.

After the unlocking key is received, the lock check component 23, sends the unlocking key to an unlock key checker component (UNLOCK KEY CHECKER) 27 that checks a combination of the unlocking key and the identification against a predetermined requirement. If the combination meets the predetermined requirement, the unlock key checker causes unlocking of the functionality or functionalities of the inserter system control program 24, represented by the functionality code incorporated in unlocking key.

According to the present example, the unlocking key is an unlocking object that is tied to a specific system by the system identification incorporated therein.

To protect against tampering with the unlocking object, for instance by copying the unlocking objects to the new system and editing stored system identifications in order to apply the unlocking to another system without an authorization to do so, it also includes a so-called message digest of the unlocking data and the system identification. An example of such a message digest is Message Digest 5, developed by RSA Data Security, Inc.

The unlocking object is stored on the customer system at the customer site in a named unlocking record, where the name of the record is the name of the unlocked functionality or group of functionalities. This name is used for retrieval of data when the license is checked.

To allow operation of a normally locked functionality or group of functionalities, the unlocking object is checked. This includes the following steps:
- Extract all unlocking information from the named unlocking record. Which record needs to be retrieved is determined by the name of the functionality or group of functionalities to be checked for unlocking. The named record contains the indication of the functionalities and the duration of the validity unlocking, but not the system identification.
- Extract the system identification from the system on which the check needs to be performed.
- Compare the combination of the extracted information and the system identification with the message digest of the named unlocking record.

According to this example, the unlock key checker 27 also monitors a counter 28 to determine when the validity of the unlocking of a functionality expires. If the validity of the unlocking of a functionality expires, the unlocking object is automatically rendered ineffective and a warning is displayed. It is however also possible, to only register and/or display the expiration of the validity of the unlocking of a functionality.

The limitation of the validity of the unlocking object may for instance be defined in terms of a fixed period of time starting from the first unlocking responsive to that object or of a period of time ending at a predetermined fixed point in time. It may also be provided that the unlocking object is only operative after a predetermined point in time. For unlocking one or more functionalities for the purpose of servicing the inserter system 1, the validity of the unlocking may for instance be limited to one day and the service technician may have the unlock key generator installed on a portable computer and input the unlock key code via a connection with the computer 3 or via a keyboard or other user interface. For such service purposes, the unlocked functionality preferably includes settings of the apparatus to which only service engineers and similar specialists should have access.

In particular while functionalities are unlocked for service purposes, two or more unlockings with different remaining durations of validity will generally be valid simultaneously. This may be unlockings of different functionalities. According to the present example, it is also possible that two or more unlockings with different remaining durations of validity apply simultaneously to the same functionality. Thus, a set of functionalities unlocked for service purposes may be the same for each individual system that is serviced, independent of the unlockings the users of the several systems have activated.

For allowing selective access to particular functionalities of a computer system, it is known to make such access dependent on the status of the user name under which the user is logged in. According to the present example, at least one unlocking key selectively indicates one of at least two unlocking levels; the first unlocking level not making available a functionality if a logged in user has no access rights thereto and a second unlocking level making available a functionality even if a logged in user has no access rights thereto. This allows functionalities that are locked for normal users to be made available to selected persons, such as service engineers, without having to allow the service engineer to log into the system as and administrator (or other status with more than minimal or normal access rights) or with a specifically tailored status.

Depending on the requirements of a user, other durations of the validity of the unlocking up to an endless duration may be provided. Also limited durations in combination with a subscription to an automatic renewal service may be provided.

The limitation of the duration may also be made dependent on the occurrence of a particular event that is registered by the counter 28 or otherwise. For instance, again for service and maintenance purposes it would be preferred of the validity of an unlocking of functionalities ends after the computer program application for controlling the inserter system 1 is closed or the computer is shut down. The unlocking may also be caused to become invalid in response to a particular number of times the unlocked functionality has been used, for instance in response to a number of envelopes onto which an address has been printed for an envelope printing functionality.

Because the identification code includes a system identification code at least partially obtained from one or more hardware items 1, 3, the unlocking code can be caused to be effective for that individual hardware item or combination of hardware items only, without the need of previous registration and the system identification code cannot, or at least not without substantial difficulty, be transferred to another apparatus.

The computer-controlled apparatus of which one or more functionalities need to be operative, may be the computer hardware 3 itself. In the present example, where the computer controlled apparatus is an inserter system 1, the system identification code is obtaine d from that inserter system 1 connected to the computer for control by the computer, so that the unlocking of a functionality is valid for that individual inserter system 1, independently of the computer system by which it is controlled. If the system identification code is obtained from the inserter system 1 only, unlocking of functionalities related to the control of a particular inserter station 1 may be operative for any computer connected thereto. Thus, a functionality may be unlockable by the same unlocking object on several computers of which one or more may be located remotely from the inserter system 1, provided they are connected to that inserter system 1.

## Claims

1. A method for unlocking at least one functionality of a computer controlled apparatus (1, 3), including:
obtaining an identification code;
sending the identification code to an unlocking service (21);
receiving at least one unlocking key including a functionality code that represents at least one functionality to be unlocked;
checking a combination of the at least one unlocking key and the identification against a predetermined requirement; and
in response to said combination meeting said predetermined requirement, selectively unlocking the at least one functionality represented by the at least one functionality code;
**characterized in that,** said unlocking or at least one of said unlockings has a limited validity ending after the first unlocking of the at least one functionality in response to the combination including said at least one unlocking key meeting said predetermined requirement.

2. A method according to claim 1, further including registering a period of time after the first unlocking of the at least one functionality in response said combination including said at least one unlocking key meeting said predetermined requirement and terminating the validity of the at least one unlocking key in response the registration of the elapse of a predetermined period of time.

3. A method according to claim 1, further including registering at least one event after the first unlocking of the at least one functionality in response the combination including said at least one unlocking key meeting said predetermined requirement and terminating the validity of the at least one unlocking key in response the registration of said at least one event.

4. A method according to any one of the preceding claims, wherein the at least one unlocked functionality includes a setting of the apparatus (1, 3).

5. A method according to any one of the preceding claims, wherein at least two unlockings with different remaining durations of validity are simultaneously valid.

6. A method according to any one of the preceding claim, wherein the identification code includes a system identification code at least partially obtained from at least a component (2, 18) of the apparatus (1, 3).

7. A method according to claim 6, wherein the system identification code is obtained from an apparatus (1) connected to the computer (3) for control by the computer.

8. A method according to any one of the preceding claims, wherein said at least one unlocking key selectively indicates one of at least two unlocking levels; said first unlocking level not making available a functionality if a logged in user has no access rights thereto and a second unlocking level making available a functionality even if a logged in user has no access rights thereto.

9. A system adapted for unlocking at least one functionality of a computer controlled apparatus (1, 3), including:
instructions (22) for obtaining an identification code;
a communication structure (18) for sending the identification code to an unlocking service (21) and for receiving at least one unlocking key including a functionality code that represents at least one functionality to be unlocked; and
instructions (27) for checking a combination of the at least one unlocking key and the identification against a predetermined requirement; and for, in response to said combination meeting said predetermined requirement, selectively unlocking the at least one functionality represented by the at least one functionality code;
**characterized by**, instructions (27) for limiting validity of said unlocking or of at least one of said unlockings.

10. A method for providing an unlocking key for unlocking at least one functionality of a computer controlled apparatus (1, 3), including:
receiving an identification code and a request indicating at least one functionality to be unlocked;
generating and sending at least one unlocking key in accordance with the received identification code and including at least one functionality code that represents at least one functionality to be unlocked;
**characterized in that**, said at least one unlocking key includes a validity code determining a limited validity.
